# FASCICULE DE BREVET EUROPEEN

(11) **EP 3 745 808 B1**
(45) Date de publication et mention de la délivrance du brevet: **11.01.2023**
(21) Numéro de dépôt: 20176345.5
(22) Date de dépôt: 25.05.2020
(51) Int. Cl.: H04W 76/14, H04W 16/20, H04L 12/28, H04W 84/12

(54) **PROCÉDÉ ET DISPOSITIF D'INSTALLATION D'UN NOEUD DANS UN RÉSEAU DOMESTIQUE**
VERFAHREN UND VORRICHTUNG ZUM EINBAU EINES NETZKNOTENS IN EIN HEIMNETZWERK
METHOD AND DEVICE FOR INSTALLING A NODE IN A HOME NETWORK

(30) Priorité: 28.05.2019 FR 1905680
(43) Date de publication de la demande: 02.12.2020
(73) Titulaire: SAGEMCOM BROADBAND SAS, 92500 Rueil-Malmaison (FR)
(72) Inventeur: ROCQUELAY, Antonie, 92500 RUEIL MALMAISON (FR); ATZEL, Loig, 92500 RUEIL MALMAISON (FR)
(74) Mandataire: Cabinet Le Guen Maillet

(56) Documents cités:
- EP-A2- 2 713 671
- TW-B- I 648 999
- Netgear ET AL: "Universal WiFi Range Extender WN2000RPT - User Manual", , 1 décembre 2010 (2010-12-01), pages 1-31, XP055157630, Extrait de l'Internet: URL:http://www.downloads.netgear.com/files /GDC/WN2000RPT/WN2000RPT_UM_8Dec10.pdf [extrait le 2014-12-09]
- Netgear ET AL: "User Manual Ac1750 WIFi Mesh Extender", , 15 janvier 2019 (2019-01-15), pages 1-64, XP055671023, Extrait de l'Internet: URL:http://www.downloads.netgear.com/files /GDC/EX6250/EX6250_UM_EN.pdf [extrait le 2020-02-21]

## Description

### DOMAINE TECHNIQUE

La présente invention concerne un procédé et un dispositif d'installation d'un nœud dans un réseau domestique.

### ETAT DE LA TECHNIQUE ANTERIEURE

Au sein d'un réseau domestique tel que par exemple un réseau de type Wi-Fi, connecté à internet via une passerelle résidentielle, il est parfois nécessaire d'étendre la couverture du réseau domestique de la passerelle domestique. Des dispositifs tels que des décodeurs TV, des extendeurs de réseau, permettent de réaliser cette extension de la couverture réseau fournie par la passerelle résidentielle. Ces dispositifs sont reliés entre eux par l'intermédiaire d'un réseau Wi-Fi maillé (appelé Mesh en anglais).

L'installation d'un nouveau nœud nécessite parfois l'intervention sur site d'un technicien. Cette solution, du fait du délai et du coût d'intervention du technicien de l'opérateur, n'est pas optimale.

Une autre possibilité pourrait être l'ajout de nouveaux modes de fonctionnement du réseau domestique Wi-Fi tels que le mode « infrastructure » ou le mode « Ad Hoc » ou le mode « Wi-Fi direct », ou l'ajout d'un nouveau nom d'un réseau sans fil (Service Set Identifier en anglais) dédié. Ces ajouts ne sont pas nécessaires au fonctionnement nominal après l'installation d'un nouveau nœud.

Une autre possibilité pourrait être l'ajout de nouveaux réseaux sans fil tels que Bluetooth/Rfid/Nfc. Ces ajouts ne sont pas nécessaires au fonctionnement nominal après l'installation d'un nouveau nœud.

Le brevet TW I 648 999 divulgue un réseau maillé qui comprend dispositif comportant un bouton WPS et un circuit de traitement. Le bouton WPS peut déclencher un processus de connexion WPS.

Le document Netgear et Al intitulé « user manual Ac1750 Wifi Mesh Extender » décrit l'installation d'un nœud dans un réseau Wifi. La présente invention a pour but de résoudre les inconvénients de l'art antérieur en proposant un procédé et un dispositif d'installation qui permettent de réaliser une installation d'un nouveau nœud d'un réseau maillé en utilisant que les éléments présents dans le réseau domestique, sans l'intervention d'un technicien, qui soit simple et sécurisée tout en évitant l'ajout de nouveaux modes de fonctionnement ou de nouveaux réseaux sans fils qui ne sont pas utiles dans l'utilisation classique du réseau domestique.

### EXPOSE DE L'INVENTION

L'invention est réalisée selon les revendications indépendantes annexées. Des caractéristiques optionnelles de l'invention sont réalisées selon les revendications dépendantes.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente un réseau de télécommunication dans lequel la présente invention est implémentée ;
[Fig. 2] représente un exemple d'architecture d'un nœud dans lequel la présente invention est implémentée ;
[Fig. 3] représente un exemple d'architecture d'un dispositif client dans lequel la présente invention est implémentée ;
[Fig. 4a] représente un exemple d'algorithme exécuté par un nouveau nœud lorsque celui-ci est installé dans un réseau maillé selon la présente invention ;
[Fig. 4b] représente un exemple d'algorithme exécuté par un nouveau nœud lorsque celui-ci est installé dans un réseau maillé selon la présente invention ;
[Fig. 5a] représente un exemple d'algorithme exécuté par un nœud maillé lorsque le nœud est un nœud gérant l'installation d'un nouveau nœud du réseau maillé selon la présente invention ;
[Fig. 5b] représente un exemple d'algorithme exécuté par un nœud maillé lorsque le nœud est un nœud gérant l'installation d'un nouveau nœud du réseau maillé selon la présente invention ;
[Fig. 6] représente un exemple d'algorithme exécuté par un dispositif client lors de l'installation d'un nouveau nœud dans le réseau maillé selon la présente invention.

### EXPOSE DETAILLE DE MODES DE REALISATION

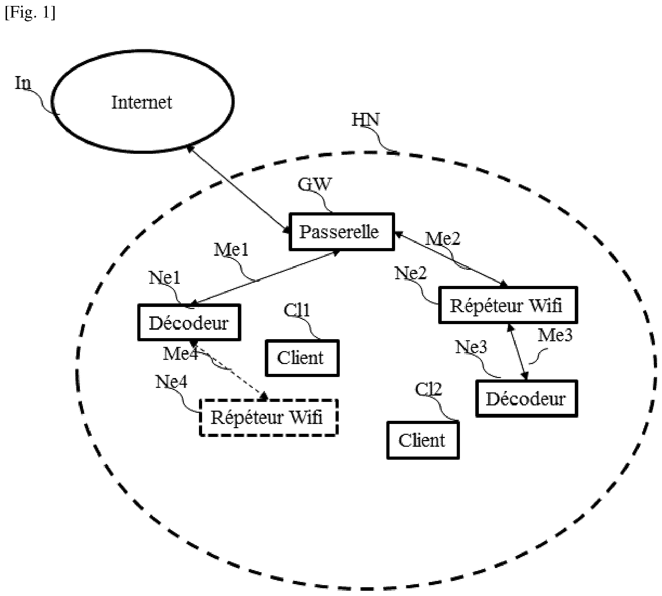

La Fig. 1 représente un réseau de télécommunication dans lequel la présente invention est implémentée.

Le réseau de télécommunication de la Fig. 1 est un réseau domestique HN (Home Network en anglais) qui comporte une passerelle résidentielle GW (Gateway en anglais) reliée à un réseau de type Internet In. La passerelle résidentielle GW sert de point d'accès au réseau Internet In et aux dispositifs du réseau domestique HN par l'intermédiaire d'un réseau sans fil de type Wi-Fi. Par exemple, un décodeur TV Ne1 (Set-top box en anglais), un répéteur Wi-Fi Ne2, un décodeur TV Ne3, deux dispositifs client Cl1 et Cl2 sont compris dans le réseau domestique HN.

Les dispositifs client Cl1 et Cl2 sont par exemple des ordinateurs, des tablettes tactiles ou des téléphones intelligents.

Les décodeurs TV Ne1, Ne3, le répéteur Wi-Fi Ne2 sont des nœuds d'un réseau maillé symbolisé par les flèches notées Me1, Me2, Me3 dans la Fig. 1.

Selon la présente invention, un nouveau nœud Ne4 est installé dans le réseau domestique HN fournissant un réseau client. Le nœud Ne4 est par exemple un répéteur Wi-Fi ou extendeur. Le nœud Ne4, si l'installation aboutit, sera relié au réseau maillé par la liaison symbolisée par la flèche notée Me4.

Le réseau maillé comprend les liens de communication entre les différents nœuds du réseau Wi-FI. Le réseau client comprend les liaisons des dispositifs client dans le réseau domestique. Le réseau client est fourni par la passerelle ou par chaque nœud du réseau maillé et permet aux dispositifs client (smartphone, tablette, ordinateur, etc) d'accéder entre autres à un réseau externe par l'intermédiaire de la passerelle résidentielle.

Il est à remarquer que dans le cas d'un réseau maillé de type Ad-Hoc, tous les nœuds visibles entre eux peuvent s'échanger des messages sans avoir effectué de connexion ; alors que dans le cas d'un réseau maillé de type Infrastructure, seuls les nœuds connectés entre eux entre un client et un point d'accès peuvent s'échanger des messages.

Selon la présente invention, un nœud du réseau maillé prenant en charge l'installation :
- détecte une nouvelle connexion venant d'un nouveau nœud au réseau client fourni par le nœud prenant en charge l'installation,
- reçoit un identifiant d'un dispositif client désirant prendre un rôle de tiers de confiance, le dispositif client étant connecté au réseau client fourni par le nouveau nœud, lui-même connecté au réseau client du nœud prenant en charge l'installation,
- vérifie si le dispositif client est un utilisateur régulier du réseau domestique afin d'endosser le rôle de tiers de confiance et, dans l'affirmative :
- notifie au nouveau nœud que le dispositif client qui est connecté au réseau client fourni par le nouveau nœud doit être déconnecté du réseau client fourni par le nouveau nœud,
- détecte une connexion du dispositif client au réseau client fourni par un autre nœud du réseau maillé ou au réseau client fourni par le nœud prenant en charge l'installation,
- transfère au nouveau nœud des identifiants du réseau maillé selon un protocole sécurité de la couche de transport si la connexion du dispositif client au réseau client fourni par un autre nœud du réseau maillé ou au réseau client fourni par le nœud prenant en charge l'installation est détectée.

Selon la présente invention, le nouveau nœud à installer :
- se connecte au réseau client fourni par le réseau domestique,
- se connecte selon un protocole sécurité de la couche de transport au nœud maillé prenant en charge l'installation,
- détecte une nouvelle connexion venant d'un dispositif client désirant prendre le rôle de tiers de confiance au réseau client fourni par le nouveau nœud,
- récupère un identifiant du dispositif client désirant prendre le rôle de tiers de confiance et transfère l'identifiant vers le nœud prenant en charge l'installation,
- reçoit une notification demandant de déconnecter le dispositif client endossant le rôle de tiers de confiance du réseau client fourni par le nouveau nœud,
- déconnecte le dispositif client du réseau client fourni par le nouveau nœud,
- reçoit du nœud prenant en charge l'installation des identifiants permettant au nouveau nœud de se connecter au réseau maillé,
- configuration des identifiants permettant de finaliser l'installation du nouveau nœud.

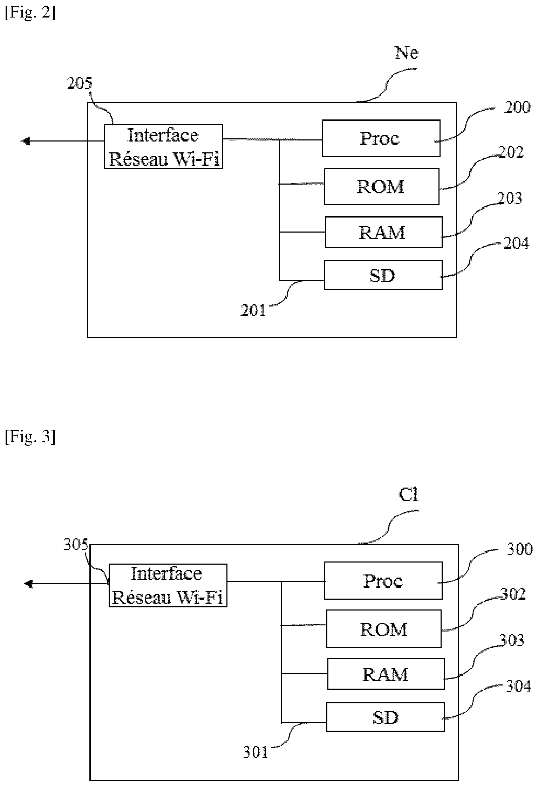

La Fig. 2 représente un exemple d'architecture d'un nœud dans lequel la présente invention est implémentée.

Le nœud Ne comprend :
- un processeur, micro-processeur, ou microcontrôleur 200 ;
- une mémoire volatile 203 ;
- une mémoire non volatile 202 ;
- éventuellement, un lecteur 204 de médium de stockage, tel qu'un lecteur de carte SD (Secure Digital Card en anglais ou Carte Numérique Sécurisée en français) ou un disque dur ;
- un ou plusieurs modules radios Wi-Fi comportant chacune une ou plusieurs interfaces réseaux Wi-Fi 205 ;
- un bus de communication 201 reliant le processeur 200 à la mémoire ROM 202, à la mémoire RAM 203, au lecteur de médium de stockage 204 et à l'interface réseau 205.

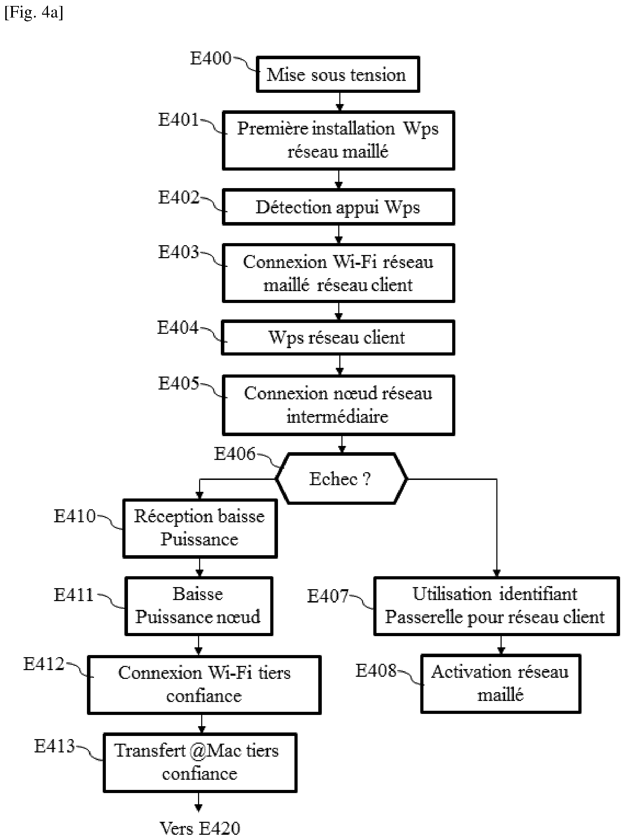

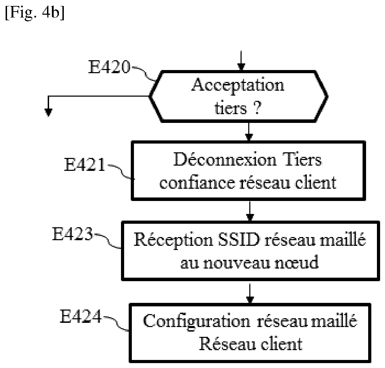

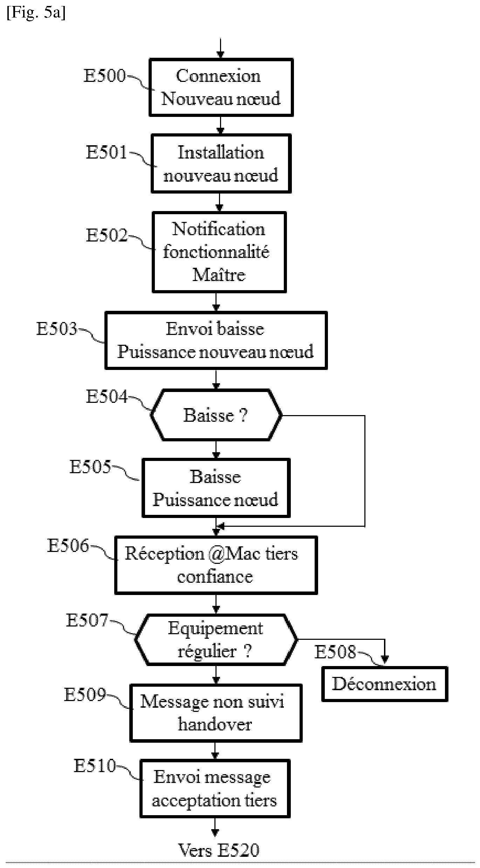

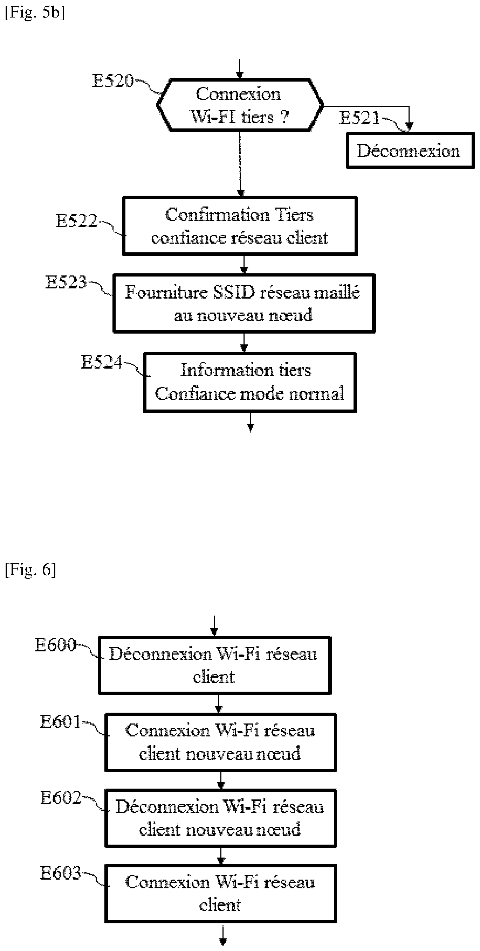

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le nœud Ne est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec les Figs. 4 et 5.

Tout ou partie du procédé décrit en relation avec les Figs. 4 et 5 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

La Fig. 3 représente un exemple d'architecture d'un dispositif client dans lequel la présente invention est implémentée.

Le dispositif client Cl comprend :
- un processeur, micro-processeur, ou microcontrôleur 300 ;
- une mémoire volatile 303 ;
- une mémoire non volatile 302 ;
- éventuellement, un lecteur 304 de médium de stockage, tel qu'un lecteur de carte SD (Secure Digital Card en anglais ou Carte Numérique Sécurisée en français) ou un disque dur ;
- un ou plusieurs modules radio Wi-Fi comportant chacune une ou plusieurs interfaces réseaux Wi-Fi 305 ;
- un bus de communication 301 reliant le processeur 300 à la mémoire ROM 302, à la mémoire RAM 303, au lecteur de médium de stockage 304 et à l'interface réseau 305.

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le dispositif client Cl est mis sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 6.

Tout ou partie du procédé décrit en relation avec la Fig. 6 peut être implémenté sous forme logicielle par exécution d'un ensemble d'instructions par une machine programmable, telle qu'un DSP (Digital Signal Processor en anglais ou Unité de Traitement de Signal Numérique en français) ou un microcontrôleur ou être implémenté sous forme matérielle par une machine ou un composant dédié, tel qu'un FPGA (Field-Programmable Gate Array en anglais ou Matrice de Portes Programmable sur le Terrain en français) ou un ASIC (Application-Specific Integrated Circuit en anglais ou Circuit Intégré Spécifique à une Application en français).

Les Figs. 4 représentent un exemple d'algorithme exécuté par un nouveau nœud lorsque celui-ci est installé dans un réseau maillé selon la présente invention.

Le présent algorithme est décrit dans un exemple dans lequel il est exécuté par le processeur 200 du nœud Ne4.

A l'étape E400 de la Fig. 4a, le nœud Ne4 est mis sous tension. Par exemple le nœud Ne4 est mis sous tension par l'utilisateur du dispositif client Cl1. Le nœud Ne4 est ainsi un nouveau nœud du réseau maillé.

A l'étape E401, le nouveau nœud Ne4 charge et exécute un logiciel de première installation du nouveau nœud qui associe un bouton poussoir WPS (acronyme de Wi-Fi Protected Setup) dans une configuration de gestion du réseau maillé.

A l'étape suivante E402, le nouveau nœud Ne4 détecte un appui sur le bouton poussoir WPS du nœud Ne4. Le but du protocole WPS est de simplifier la phase de configuration de la sécurité des réseaux sans fils. Il permet à des particuliers ayant peu de connaissances en matière de sécurité de configurer un accès WPA, supporté par les appareils Wi-Fi. En parallèle, l'utilisateur du dispositif client Cl1 a effectué un appui sur le bouton poussoir WPS de la passerelle domestique GW ou sur un nœud du réseau maillé s'il en existe un.

En variante, le nouveau nœud Ne4 détecte la saisie d'un identifiant correspondant à celui présenté sur une étiquette du nœud Ne4.

A l'étape E403, l'interface Wi-Fi qui est destinée à assurer la liaison avec le réseau maillé est connectée au réseau client de la passerelle domestique GW ou d'un nœud du réseau maillé. Les identifiants de connexion sur le réseau client fourni par le réseau domestique sont reçus et mémorisés à cette même étape.

A l'étape suivante E404, le nouveau nœud Ne4 associe au bouton poussoir WPS du nœud Ne4 une configuration réseau client.

A l'étape suivante E405, le nouveau nœud Ne4 tente d'établir une connexion avec selon un protocole Sécurité de la couche de transport (Transport Layer Security en anglais) la passerelle résidentielle ou le nœud avec lequel la liaison Wi-Fi est établie.

Le protocole TLS fonctionne suivant un mode client-serveur. Il permet de satisfaire les objectifs d'authentification, de confidentialité des données échangées (ou session chiffrée), l'intégrité des données échangées.

A l'étape suivante, le nouveau nœud Ne4 vérifie si la connexion selon le protocole sécurité de la couche de transport a échoué ou non.

Si la connexion a échoué, c'est-à-dire si aucune réponse à la tentative de connexion n'a été reçue, le nouveau nœud Ne4 est le premier nœud du réseau maillé. Le nouveau nœud Ne4 passe à l'étape E407.

Si la connexion a réussi, le nouveau nœud Ne4 passe à l'étape E410.

A l'étape E407, le nouveau nœud Ne4 récupère les identifiants de connexion du réseau client fourni par le réseau domestique mémorisés à l'étape E403, tel que le Ssid (acronyme de Service Set Identifier), et reçus de la passerelle domestique ou d'un nœud du réseau maillé comme identifiants devant être utilisés par les dispositifs client pour se connecter au réseau client fourni par le nouveau nœud Ne4 installé.

A l'étape E408, le nouveau nœud Ne4 active la fonctionnalité réseau maillé du nœud Ne4.

A l'étape E410, le nouveau nœud Ne4 détecte la réception d'un message indiquant que celui-ci doit baisser la puissance d'émission de son interface Wi-Fi.

A l'étape E411, le nouveau nœud Ne4 commande l'interface Wi-Fi 205 pour que la puissance d'émission soit réduite.

A l'étape suivante E412, le nouveau nœud Ne4 détecte la connexion d'un dispositif client Cl1 par l'intermédiaire de son interface Wi-Fi 205. La connexion du dispositif client est par exemple effectuée en détectant la saisie de l'identifiant Ssid du nœud Ne4 imprimé sur une étiquette placée sur le nouveau nœud ne4 ou par une connexion par l'intermédiaire de boutons poussoirs WPS.

A l'étape suivante E413, le nouveau nœud Ne4 commande le transfert de l'adresse Mac utilisée comme identifiant du dispositif client Cl1 au nœud auquel il est relié, par exemple le nœud Nel, en utilisant le protocole sécurisé de la couche transport afin de permettre une validation d'un rôle de tiers de confiance endossé par ledit dispositif client Cl1.

A l'étape suivante E420 de la Fig. 4b, le nœud Nelvérifie si un message d'acceptation du rôle de tiers de confiance endossé par ledit dispositif client Cllest reçu du nœud Ne1.

Dans la négative, le nouveau nœud Ne4 interrompt le présent algorithme. Dans l'affirmative, le nouveau nœud Ne4 passe à l'étape E421.

A l'étape E421, le nouveau nœud Ne4 déconnecte le dispositif client Cl1 de son interface Wi-Fi 205. Pour cela, le nouveau nœud Ne4 désactive son réseau client ou optionnellement met en liste noire l'adresse Mac du dispositif client. A cette même étape, le nouveau nœud Ne4 commande le transfert d'un message à destination du nœud Nel, informant celui-ci de la déconnexion du dispositif client Cl1.

A l'étape E423, le nouveau nœud Ne4 détecte la réception des identifiants du nœud Ne1 permettant au nouveau nœud de se joindre au réseau maillé, configure son réseau maillé et son réseau client à partir de ces identifiants, finalise l'insertion du nœud dans le réseau maillé et passe dans un état nominal à l'étape E424.

Les Figs. 5 représentent un exemple d'algorithme exécuté par un nœud maillé lorsque le nœud est un nœud gérant l'installation d'un nouveau nœud du réseau maillé selon la présente invention.

Le présent algorithme est décrit dans un exemple dans lequel il est exécuté par le processeur 200 du nœud Ne1.

A l'étape E500 de l'algorithme de la Fig. 5a, le processeur 200 détecte un appui sur le bouton poussoir WPS du nœud Ne1. En parallèle, l'utilisateur du dispositif client Cl1 a effectué un appui sur le bouton poussoir WPS d'un nouveau nœud, par exemple le nœud Ne4. Le nouveau nœud Ne4 est ainsi connecté au réseau client fourni par le nœud Ne1.

A l'étape suivante E501, le nœud Ne1 détecte, par l'intermédiaire de la connexion Wi-Fi, une tentative de connexion selon le protocole sécurité de la couche de transport.

A l'étape suivante E502, le nœud Ne1 commande l'interface 205 pour notifier à chaque autre nœud du réseau maillé qu'il prend en charge l'installation d'un nouveau nœud.

A l'étape suivante E503, le nœud Ne1 commande l'émission d'un message indiquant au nouveau nœud Ne4 que celui-ci doit baisser la puissance d'émission de son interface Wi-Fi.

A l'étape suivante E504, le nœud Ne1 vérifie si le nouveau nœud Ne4 a baissé la puissance d'émission de son interface Wi-Fi. Dans l'affirmative, le nœud Ne1 passe à l'étape E506. Dans la négative, le nœud Ne1 passe à l'étape E505.

A l'étape E505, le nœud Ne1 commande l'interface Wi-Fi 205, pour que la puissance d'émission soit réduite et passe ensuite à l'étape E506.

A l'étape E506, le nœud Ne1 détecte la réception de l'adresse Mac du dispositif client Cl1 par le nouveau nœud Ne4.

A l'étape E507, le nœud Ne1 vérifie si l'adresse Mac reçue correspond à celle d'un dispositif client régulier du réseau domestique afin de valider un rôle de tiers de confiance. Chaque nœud mémorise l'adresse Mac des dispositifs client auxquels il a été relié. Un dispositif client régulier est un dispositif client qui accède périodiquement au réseau domestique. Un dispositif client régulier est par exemple un dispositif client qui accède au réseau domestique au moins dix fois par mois. Pour cela, le nœud Ne1 interroge une base de données d'une fonction découverte « device discovery en anglais » effectuant la surveillance des dispositifs client et interroge les autres bases de données des autres nœuds du réseau maillé.

Si l'adresse Mac reçue correspond à celle d'un dispositif client régulier, le nœud Ne1 passe à l'étape E509. Dans la négative, le nœud Ne1 passe à l'étape E508 et interrompt l'installation du nouveau nœud Ne4 à l'étape E508.

A l'étape E509, le nœud Ne1 commande le transfert d'un message à tous les autres nœuds, à l'exception du nœud Ne4, indiquant que le dispositif client Cl1 dont l'adresse Mac leur a précédemment été communiquée ne doit plus être pris en charge par ceux-ci dans un éventuel transfert inter cellule (Handover en anglais). Ce même message indique que les autres nœuds doivent l'informer de toute présence de cette adresse Mac sur le réseau domestique.

A l'étape suivante E510, le nœud Ne1 commande le transfert d'un message à destination du nouveau nœud Ne4 informant celui-ci de l'acceptation du rôle de tiers de confiance endossé par le dispositif client Cl1.

A l'étape E520 de la Fig. 5b, le nœud Ne1 vérifie si le dispositif client Cl1 se connecte au réseau client fourni par le réseau domestique. Dans l'affirmative, le nœud Ne1 passe à l'étape E522. Dans la négative, le nœud Ne1 passe à l'étape E521 et interrompt l'installation du nouveau nœud Ne4 à l'étape E521.

A l'étape E522, le nœud Ne1 détermine que le dispositif client est un tiers de confiance. A l'étape suivante E523, le nœud Ne1 commande l'émission des identifiants du réseau maillé au nœud Ne4 selon le protocole TLS.

A l'étape suivante E524, le nœud Ne1 notifie aux autres nœuds du réseau maillé que le dispositif client Cl1 doit être considéré comme un dispositif client classique, que celui-ci ne doit pas être mis en liste noire et que des Handover des dispositifs client Cl1 peuvent être exécutés.

Il est à remarquer que dans un mode particulier de réalisation, le nœud Ne1 peut exécuter E506 à E509 au moins deux fois.

La Fig. 6 représente un exemple d'algorithme exécuté par un dispositif client lors de l'installation d'un nouveau nœud dans le réseau maillé selon la présente invention.

A l'étape E600, le dispositif client Cl1 reçoit une déconnexion du réseau client fourni par la passerelle résidentielle ou un nœud du réseau domestique.

A l'étape E601, le dispositif client Cl1 se reconnecte au réseau client fourni par le nouveau nœud Ne4 par l'intermédiaire de son profil Wi-Fi sauvegardé correspondant au nouveau nœud Ne4.

A l'étape E602, le dispositif client Cl1 détecte que le dispositif client Cl1 est déconnecté du réseau client fourni par le nouveau nœud Ne4.

A l'étape E603, le dispositif client Cl1 se reconnecte au réseau client fourni par le nœud Ne1 du réseau domestique.

## Revendications

1. Procédé d'installation d'un nouveau nœud (Ne4) dans un réseau domestique sans fil, le réseau domestique étant constitué d'un réseau client par lequel des dispositifs client (Cl1, C12) accèdent à un réseau externe par l'intermédiaire d'une passerelle résidentielle (GW), le réseau domestique comportant un nœud (Nel) apte à former un réseau maillé au sein du réseau domestique pour étendre la portée du réseau domestique, le procédé comporte les étapes de :
- connexion, par le nouveau nœud, du nouveau nœud à installer au réseau client fourni par le réseau domestique,
- détection (E500), par le nœud du réseau domestique, d'une connexion d'un nouveau nœud au réseau client fourni par le nœud du réseau domestique,
- connexion, par le nouveau nœud, selon un protocole sécurité de la couche de transport au nœud apte à former un réseau maillé,
- détection, par le nouveau nœud, d'une nouvelle connexion venant d'un dispositif client au réseau client fourni par le nouveau nœud,
- récupération, par le nouveau nœud, d'un identifiant du dispositif client et transfert de l'identifiant vers le nœud apte à former le réseau maillé,
- réception (E506), par le nœud du réseau domestique, d'un identifiant d'un dispositif client qui est connecté au réseau client fourni par le nouveau nœud,
- vérification (E507), par le nœud du réseau domestique, si le dispositif client est un dispositif client connu du réseau domestique et, dans l'affirmative : **caractérisé en ce que**:
- notification (E510), par le nœud du réseau domestique, au nouveau nœud que le dispositif client qui est connecté au réseau client fourni par le nouveau nœud doit être déconnecté du réseau client,
- réception, par le nouveau nœud, d'une notification demandant de déconnecter le dispositif client du réseau client fourni par le nouveau nœud,
- déconnection, par le nouveau nœud, du dispositif client du réseau client fourni par le nouveau nœud,
- détection (E520), par le nœud du réseau domestique, d'une connexion du dispositif client au réseau client fourni par le nœud du réseau domestique,
- transfert (E523), par le nœud du réseau domestique, au nouveau nœud des identifiants du réseau maillé selon un protocole sécurité de la couche de transport si la connexion du dispositif client déconnecté au réseau client fourni par le nœud du réseau domestique est détectée,
- réception, par le nœud du réseau domestique, du nœud apte à former un réseau maillé des identifiants permettant au nouveau nœud de se connecter au réseau maillé,
- configuration, par le nœud du réseau domestique, des identifiants permettant de finaliser le procédé d'installation du nouveau nœud.

2. Procédé selon la revendication 1, **caractérisé en ce que** le transfert au nouveau nœud des identifiants du réseau maillé selon un protocole sécurité de la couche de transport est effectué si le dispositif client est déconnecté au moins deux fois du réseau client fourni par le nouveau nœud et si le dispositif client se connecte au réseau client fourni par le nœud du réseau domestique à chaque déconnexion du réseau client fourni par le nouveau nœud.

3. Procédé selon la revendication 1 ou 2, **caractérisé en ce que** le procédé comporte en outre une étape, exécutée par le nœud du réseau domestique, de transfert d'une commande de réduction de la puissance d'émission des signaux émis par le nouveau nœud.

4. Procédé selon la revendication 3, **caractérisé en ce que** le procédé comporte en outre une étape exécutée par le nœud du réseau domestique de réduction de la puissance d'émission des signaux émis par le nœud du réseau domestique si aucune baisse de la puissance d'émission des signaux émis par le nouveau nœud n'est détectée.

5. Procédé selon l'une quelconque des revendications précédentes, **caractérisé en ce que** le procédé comporte en outre l'étape exécutée par le nœud du réseau domestique, effectuée préalablement à la notification au nouveau nœud que le dispositif client qui est connecté au réseau client fourni par le nouveau nœud doit être déconnecté du réseau client, de transfert d'un message à destination d'autres nœuds du réseau de notification aux autres nœuds que le dispositif client ne doit pas être pris en charge par les autres nœuds.

6. Procédé selon la revendication 5, **caractérisé en ce que** le procédé comporte en outre l'étape exécutée par le nœud du réseau domestique, effectuée postérieurement au transfert au nouveau nœud des identifiants du réseau, de transfert d'un message à destination d'autres nœuds du réseau de notification aux autres nœuds que le dispositif client peut être pris en charge par les autres nœuds.

7. Procédé selon la revendication 5, **caractérisé en ce que** la non prise en charge ou la prise en charge est effectuée à partir d'une liste noire ou une liste blanche d'identifiants de dispositifs client.

8. Procédé selon l'une quelconque des revendications 5 à 7, **caractérisé en ce que** le procédé comporte en outre une étape de notification aux autres nœuds de la prise en charge par le nœud du réseau de l'installation du nouveau nœud.

9. Système d'installation d'un nouveau nœud dans un réseau domestique sans fil, le réseau domestique étant constitué d'un réseau client par lequel des dispositifs client accèdent à un réseau externe par l'intermédiaire d'une passerelle résidentielle, le réseau domestique comportant un nœud apte à former un réseau maillé au sein du réseau domestique pour étendre la portée du réseau domestique, le système comporte :
- des moyens de connexion, compris dans le nouveau nœud, du nouveau nœud à installer au réseau client fourni par le réseau domestique,
- des moyens de détection (E500), compris dans le nœud du réseau domestique, d'une connexion d'un nouveau nœud au réseau client fourni par le nœud du réseau domestique,
- des moyens de connexion, compris dans le nouveau nœud, selon un protocole sécurité de la couche de transport au nœud apte à former un réseau maillé,
- des moyens de détection, compris dans le nouveau nœud, d'une nouvelle connexion venant d'un dispositif client au réseau client fourni par le nouveau nœud,
- des moyens de récupération, compris dans le nouveau nœud, d'un identifiant du dispositif client et transfert de l'identifiant vers le nœud apte à former le réseau maillé,
- des moyens de réception (E506), compris dans le nœud du réseau domestique, d'un identifiant d'un dispositif client qui est connecté au réseau client fourni par le nouveau nœud,
- des moyens de vérification (E507), compris dans le nœud du réseau domestique, si le dispositif client est un dispositif client connu du réseau domestique et, dans l'affirmative : **caractérisé en ce que**:
- des moyens de notification (E510), compris dans le nœud du réseau domestique, au nouveau nœud que le dispositif client qui est connecté au réseau client fourni par le nouveau nœud doit être déconnecté du réseau client,
- des moyens de réception, compris dans le nouveau nœud, d'une notification demandant de déconnecter le dispositif client du réseau client fourni par le nouveau nœud,
- des moyens de déconnection, par le nouveau nœud, du dispositif client du réseau client fourni par le nouveau nœud,
- des moyens de détection (E520), compris dans le nœud du réseau domestique, d'une connexion du dispositif client au réseau client fourni par le nœud du réseau domestique,
- des moyens de transfert (E523), compris dans le nœud du réseau domestique, au nouveau nœud des identifiants du réseau maillé selon un protocole sécurité de la couche de transport si la connexion du dispositif client déconnecté au réseau client fourni par le nœud du réseau domestique est détectée,
- des moyens de réception, compris dans le nœud du réseau domestique, du nœud apte à former un réseau maillé des identifiants permettant au nouveau nœud de se connecter au réseau maillé,
- des moyens de configuration, compris dans le nœud du réseau domestique, des identifiants permettant de finaliser le procédé d'installation du nouveau nœud.

10. Programme d'ordinateur stocké sur un support d'informations, ledit programme comportant des instructions permettant de mettre en œuvre le procédé selon l'une quelconque des revendications 1 à 8, lorsqu'il est chargé et exécuté par un système informatique.

11. Moyens de stockage, **caractérisés en ce qu'**ils stockent un programme d'ordinateur comprenant des instructions pour mettre en œuvre, par un dispositif, le procédé selon l'une quelconque des revendications 1 à 8, lorsque ledit programme est exécuté par un processeur dudit dispositif.

## Patentansprüche

1. Verfahren zum Einbau eines neuen Knotens (Ne4) in ein drahtloses Heimnetzwerk, wobei das Heimnetzwerk aus einem Client-Netzwerk besteht, über das Client-Vorrichtungen (C11, C12) mittels eines Residential Gateways (GW) auf ein externes Netzwerk zugreifen, wobei das Heimnetzwerk einen Knoten (Nel) aufweist, der fähig ist, innerhalb des Heimnetzwerks ein vermaschtes Netzwerk zu formen, um die Reichweite des Heimnetzwerks zu erweitern,
wobei das Verfahren die folgenden Schritte aufweist:
- Verbindung, durch den neuen Knoten, des einzubauenden neuen Knotens mit dem vom Heimnetzwerk gelieferten Client-Netzwerk,
- Erfassung (E500), durch den Knoten des Heimnetzwerks, einer Verbindung eines neuen Knotens mit dem vom Knoten des Heimnetzwerks gelieferten Client-Netzwerk,
- Verbindung, durch den neuen Knoten, gemäß einem Sicherheitsprotokoll der Transportschicht mit dem Knoten, der fähig ist, ein vermaschtes Netzwerk zu formen,
- Erfassung, durch den neuen Knoten, einer von einer Client-Vorrichtung kommenden neuen Verbindung mit dem vom neuen Knoten gelieferten Client-Netzwerk,
- Wiedergewinnung, durch den neuen Knoten, einer Kennung der Client-Vorrichtung und Übertragung der Kennung zu dem Knoten, der fähig ist, das vermaschte Netzwerk zu formen,
- Empfang (E506), durch den Knoten des Heimnetzwerks, einer Kennung einer Client-Vorrichtung, die mit dem vom neuen Knoten gelieferten Client-Netzwerk verbunden ist,
- Überprüfung (E507), durch den Knoten des Heimnetzwerks, ob die Client-Vorrichtung eine dem Heimnetzwerk bekannte Client-Vorrichtung ist, und wenn ja,
**dadurch gekennzeichnet, dass**:
- Mitteilung (E510), durch den Knoten des Heimnetzwerks, an den neuen Knoten, dass die Client-Vorrichtung, die mit dem vom neuen Knoten gelieferten Client-Netzwerk verbunden ist, vom Client-Netzwerk getrennt werden soll,
- Empfang, durch den neuen Knoten, einer Mitteilung, die fordert, die Client-Vorrichtung von dem vom neuen Knoten gelieferten Client-Netzwerk zu trennen,
- Trennung, durch den neuen Knoten, der Client-Vorrichtung von dem vom neuen Knoten gelieferten Client-Netzwerk,
- Erfassung (E520), durch den Knoten des Heimnetzwerks, einer Verbindung der Client-Vorrichtung mit dem vom Knoten des Heimnetzwerks gelieferten Client-Netzwerk,
- Übertragung (E523), durch den Knoten des Heimnetzwerks, an den neuen Knoten der Kennungen des vermaschten Netzwerks gemäß einem Sicherheitsprotokoll der Transportschicht, wenn die Verbindung der getrennten Client-Vorrichtung mit dem vom Knoten des Heimnetzwerks gelieferten Client-Netzwerk erfasst wird,
- Empfang, durch den Knoten des Heimnetzwerks, vom Knoten, der fähig ist, ein vermaschtes Netzwerk zu formen, der Kennungen, die es dem neuen Knoten ermöglichen, sich mit dem vermaschten Netzwerk zu verbinden,
- Konfiguration, durch den Knoten des Heimnetzwerks, der Kennungen, die es ermöglichen, das Einbauverfahren des neuen Knotens abzuschließen.

2. Verfahren nach Anspruch 1, **dadurch gekennzeichnet, dass** die Übertragung der Kennungen des vermaschten Netzwerks an den neuen Knoten gemäß einem Sicherheitsprotokoll der Transportschicht ausgeführt wird, wenn die Client-Vorrichtung mindestens zweimal von dem vom neuen Knoten gelieferten Client-Netzwerk getrennt wird, und wenn die Client-Vorrichtung sich bei jeder Trennung des vom neuen Knoten gelieferten Client-Netzwerks mit dem vom Knoten des Heimnetzwerks gelieferten Client-Netzwerk verbindet.

3. Verfahren nach Anspruch 1 oder 2, **dadurch gekennzeichnet, dass** das Verfahren außerdem einen vom Knoten des Heimnetzwerks ausgeführten Schritt der Übertragung eines Befehls der Verringerung der Sendeleistung der vom neuen Knoten gesendeten Signale aufweist.

4. Verfahren nach Anspruch 3, **dadurch gekennzeichnet, dass** das Verfahren außerdem einen vom Knoten des Heimnetzwerks ausgeführten Schritt der Verringerung der Sendeleistung der vom Knoten des Heimnetzwerks gesendeten Signale aufweist, wenn keine Abnahme der Sendeleistung der vom neuen Knoten gesendeten Signale erfasst wird.

5. Verfahren nach einem der vorhergehenden Ansprüche, **dadurch gekennzeichnet, dass** das Verfahren außerdem den vom Knoten des Heimnetzwerks ausgeführten Schritt, der vor der Mitteilung an den neuen Knoten, dass die Client-Vorrichtung, die mit dem vom neuen Knoten gelieferten Client-Netzwerk verbunden ist, vom Client-Netzwerk getrennt werden soll, durchgeführt wird, der Übertragung einer Nachricht an andere Knoten des Netzwerks der Mitteilung an die anderen Knoten aufweist, dass die Client-Vorrichtung nicht von den anderen Knoten übernommen werden soll.

6. Verfahren nach Anspruch 5, **dadurch gekennzeichnet, dass** das Verfahren außerdem den vom Knoten des Heimnetzwerks ausgeführten Schritt, der nach der Übertragung der Kennungen an den neuen Knoten des Netzwerks durchgeführt wird, der Übertragung einer Nachricht an andere Knoten des Netzwerks der Mitteilung an die anderen Knoten aufweist, dass die Client-Vorrichtung von den anderen Knoten übernommen werden kann.

7. Verfahren nach Anspruch 5, **dadurch gekennzeichnet, dass** die Nichtübernahme oder die Übernahme ausgehend von einer schwarzen Liste oder einer weißen Liste von Kennungen von Client-Vorrichtungen durchgeführt wird.

8. Verfahren nach einem der Ansprüche 5 bis 7, **dadurch gekennzeichnet, dass** das Verfahren außerdem einen Schritt der Mitteilung der Übernahme des Einbaus des neuen Knotens durch den Knoten des Netzwerks an die anderen Knoten aufweist.

9. System zum Einbau eines neuen Knotens in ein drahtloses Heimnetzwerk, wobei das Heimnetzwerk aus einem Client-Netzwerk besteht, über das Client-Vorrichtungen mittels eines Residential Gateways auf ein externes Netzwerk zugreifen, wobei das Heimnetzwerk einen Knoten aufweist, der fähig ist, ein vermaschtes Netzwerk innerhalb des Heimnetzwerks zu formen, um die Reichweite des Heimnetzwerk zu erweitern, wobei das System aufweist:
- im neuen Knoten enthaltene Verbindungseinrichtungen des einzubauenden neuen Knotens mit dem vom Heimnetzwerk gelieferten Client-Netzwerk,
- im Knoten des Heimnetzwerks enthaltene Erfassungseinrichtungen (E500) einer Verbindung eines neuen Knotens mit dem vom Knoten des Heimnetzwerks gelieferten Client-Netzwerk,
- im neuen Knoten enthaltene Verbindungseinrichtungen gemäß einem Sicherheitsprotokoll der Transportschicht mit dem Knoten, der fähig ist, ein vermaschtes Netzwerk zu formen,
- im neuen Knoten enthaltene Erfassungseinrichtungen einer neuen Verbindung, die von einer Client-Vorrichtung kommt, mit dem vom neuen Knoten gelieferten Client-Netzwerk,
- im neuen Knoten enthaltene Wiedergewinnungseinrichtungen einer Kennung der Client-Vorrichtung und Übertragung der Kennung zu dem Knoten, der fähig ist, das vermaschte Netzwerk zu formen,
- im Knoten des Heimnetzwerks enthaltene Empfangseinrichtungen (E506) einer Kennung einer Client-Vorrichtung, die mit dem vom neuen Knoten gelieferten Client-Netzwerk verbunden ist,
- im Knoten des Heimnetzwerks enthaltene Überprüfungseinrichtungen (E507), ob die Client-Vorrichtung eine dem Heimnetzwerk bekannte Client-Vorrichtung ist, und wenn ja:
**dadurch gekennzeichnet, dass**:
- im Knoten des Heimnetzwerks enthaltene Einrichtungen zur Mitteilung (E510) an den neuen Knoten, dass die Client-Vorrichtung, die mit dem vom neuen Knoten gelieferten Client-Netzwerk verbunden ist, vom Client-Netzwerk getrennt werden soll,
- im neuen Knoten enthaltene Einrichtungen zum Empfang einer Mitteilung, die fordert, die Client-Vorrichtung von dem vom neuen Knoten gelieferten Client-Netzwerk zu trennen,
- Einrichtungen zur Trennung, durch den neuen Knoten, der Client-Vorrichtung von dem vom neuen Knoten gelieferten Client-Netzwerk,
- im Knoten des Heimnetzwerks enthaltene Erfassungseinrichtungen (E520) einer Verbindung der Client-Vorrichtung mit dem vom Knoten des Heimnetzwerks gelieferten Client-Netzwerk,
- im Knoten des Heimnetzwerks enthaltene Einrichtungen zur Übertragung (E523) an den neuen Knoten der Kennungen des vermaschten Netzwerks gemäß einem Sicherheitsprotokoll der Transportschicht, wenn die Verbindung der getrennten Client-Vorrichtung mit dem vom Knoten des Heimnetzwerks gelieferten Client-Netzwerk erfasst wird,
- im Knoten des Heimnetzwerks enthaltene Einrichtungen zum Empfang von dem Knoten, der fähig ist, ein vermaschtes Netzwerk zu formen, der Kennungen, die es dem neuen Knoten ermöglichen, sich mit dem vermaschten Netzwerk zu verbinden,
- im Knoten des Heimnetzwerks enthaltene Einrichtungen zur Konfiguration der Kennungen, die es ermöglichen, das Verfahren zum Einbau des neuen Knotens abzuschließen.

10. Computerprogramm, das auf einem Informationsträger gespeichert ist, wobei das Programme Anweisungen aufweist, die es ermöglichen, das Verfahren nach einem der Ansprüche 1 bis 8 durchzuführen, wenn es von einem Informatiksystem geladen und ausgeführt wird.

11. Speichereinrichtungen, **dadurch gekennzeichnet, dass** sie ein Computerprogramm speichern, dass Anweisungen enthält, um das Verfahren nach einem der Ansprüche 1 bis 8 durch eine Vorrichtung durchzuführen, wenn das Programm von einem Prozessor der Vorrichtung ausgeführt wird.

## Claims

1. Method for installing a new node (Ne4) in a wireless home network, the home network consisting of a client network by means of which client devices (Cl1, C12) access an external network by means of a residential gateway (GW), the home network comprising a node (Nel) able to form a mesh network within the home network in order to extend the range of the home network, the method comprises the steps of:
- connecting, by the node device, the new node to be installed to the client network supplied by the home network,
- detecting (E500), by the node of the home network, a connection of a new node to the client network supplied by the node of the home network,
- connecting, by the new node, according to a security protocol of the transport layer, to the node able to form a mesh network,
- detecting, by the new node, a new connection coming from a client device to the client device supplied by the new node,
- recovering, by the new node, an identifier of the client device and transferring the identifier to the node able to form the mesh network,
- receiving (E506), by the node of the home network, an identifier of a client device that is connected to the client network supplied by the new node,
- checking (E507), by the node of the home network, whether the client device is a client device known to the home network and, if so: **characterised in that**:
- notifying (E510), by the node of the home network, to the new node, that the client device that is connected to the client network supplied by the new node must be disconnected from the client network,
- receiving, by the new node, a notification requesting disconnecting the client device from the client network supplied by the new node,
- disconnecting, by the new node, the client device from the client network supplied by the new node,
- detecting (E520), by the node of the home network, a connection of the client device to the client network supplied by the node of the home network,
- transferring (E523), by the node of the home network, to the new node, identifiers of the mesh network according to a security protocol of the transport layer if the connection of the disconnected client device to the client network supplied by the node of the home network is detected,
- receiving, by the node of the home network, from the node able to form a mesh network, identifiers enabling the new node to connect to the mesh network,
- configuring, by the node of the home network, identifiers making it possible to finalise the method for installing the new node.

2. Method according to claim 1, **characterised in that** the transfer to the new node of the identifiers of the mesh network according to a security protocol of the transport layer is performed if the client device is disconnected at least twice from the client network supplied by the new node and if the client device connects to the client network supplied by the node of the home network at each disconnection of the client device supplied by the new node.

3. Method according to claim 1 or 2, **characterised in that** the method further comprises a step, performed by the node of the home network, of transferring a command to reduce the transmission power of the signals transmitted by the new node.

4. Method according to claim 3, **characterised in that** the method further comprises a step, performed by the node of the home network, of reducing the transmission power of the signals transmitted by the node of the home network if no drop in the transmission power of the signals transmitted by the new node is detected.

5. Method according to any one of the preceding claims, **characterised in that** the method further comprises the step, performed by the node of the home network, performed prior to the notification to the new node that the client device that is connected to the client network supplied by the new node must be disconnected from the client network, of transferring a message to other nodes in the network notifying the other nodes that the client device must not be taken over by the other nodes.

6. Method according to claim 5, **characterised in that** the method further comprises the step, performed by the node of the home network, performed subsequently to the transfer to the new node of the identifiers of the network, of transferring a message to other nodes in the network notifying the other nodes that the client device can be taken over by the other nodes.

7. Method according to claim 5, **characterised in that** the non-taking over or taking over is performed using a blacklist or a whitelist of identifiers of client devices.

8. Method according to any one of claims 5 to 7, **characterised in that** the method further comprises a step of notifying the other nodes of the taking over by the node of the network of the installation of the new node.

9. System for installing a new node in a wireless home network, the home network consisting of a client network by means of which client devices access an external network by means of a residential gateway, the home network comprising a node able to form a mesh network within the home network in order to extend the range of the home network, the system comprises:
- means, included in the new node, for connecting the new node to be installed to the client network supplied by the home network,
- means, included in the node of the home network, for detecting (E500) a connection of a new node to the client network supplied by the node of the home network,
- means, included in the new node, for connecting, according to a security protocol of the transport layer, to the node able to form a mesh network,
- means, included in the new node, for detecting a new connection coming from a client device to the client network supplied by the new node,
- means, included in the new node, for recovering an identifier of the client device and transferring the identifier to the node able to form the mesh network,
- means, included in the node of the home network, for receiving (E506) an identifier of a client device that is connected to the client device supplied by the new node,
- means, included in the node of the home network, for checking (E507) whether the client device is a client device known to the home network and, if so: **characterised in that**:
- means, included in the node of the home network, for notifying (E510) to the new node that the client device that is connected to the client network supplied by the new node must be disconnected from the client network,
- means, included in the new node, for receiving a notification requesting disconnecting the client device from the client network supplied by the new node,
- means for disconnecting, by the new node, the client device from the client network supplied by the new node,
- means, included in the node of the home network, for detecting (E520) a connection of the client device to the client network supplied by the node of the home network,
- means, included in the node of the home network, for transferring (E523) to the new node identifiers of the mesh network according to a security protocol of the transport layer if the connection of the disconnected client device to the client network supplied by the node of the home network is detected,
- means, included in the node of the home network, for receiving, from the node able to form a mesh network, identifiers enabling the new node to connect to the mesh network,
- means, included in the node of the home network, for configuring identifiers making it possible to finalise the method for installing the new node.

10. Computer program stored on an information carrier, said program comprising instructions for implementing the method according to any one of claims 1 to 8, when it is loaded into and executed by a computer system.

11. Storage means, **characterised in that** they store a computer program comprising instructions for implementing, by a device, the method according to any one of claims 1 to 8, when said program is executed by a processor of said device.
